# FASCICULE DE BREVET EUROPEEN

(11) **EP 1 782 570 B1**
(45) Date de publication et mention de la délivrance du brevet: **05.07.2017**
(21) Numéro de dépôt: 05762468.6
(22) Date de dépôt: 10.05.2005
(51) Int. Cl.: H04L 12/24, H04L 12/26, H04B 7/185

(54) **TRANSMISSION D'INFORMATIONS DE GESTION, APRÈS SÉLECTION ET COMPRESSION ÉVENTUELLE, AU SEIN D'UN RÉSEAU DE COMMUNICATION RADIO**
VERSENDEN VON STEUERUNGSINFORMATION, NACH AUSWAHL UND EVENTUELLE KOMPRESSION, IN EINEM FUNKKOMMUNIKATIONSNETZ
TRANSMITTING CONTROL INFORMATION, AFTER SELECTION AND POSSIBLE COMPRESSION, IN A RADIO COMMUNICATIONS NETWORK

(30) Priorité: 24.05.2004 FR 0451014
(43) Date de publication de la demande: 09.05.2007
(73) Titulaire: ALCATEL LUCENT, 92100 Boulogne-Billancourt (FR)
(72) Inventeur: FARINEAU, Jean, F-92300 LEVALLOIS PERRET (FR); ROUGIER, Vincent, F-75014 PARIS (FR); LIGNON, Jean-Noël, F-31270 FROUZINS (FR); AIME, Christelle, F-78380 BOUGIVAL (FR); LEVALLET, Christophe, F-78400 CHATOU (FR); POLI, Christian, F-95600 EAUBONNE (FR); LE GOFF, Marcel, F-35640 MARINES (FR); VITUREAU, Eric, F-92250 LA GARENNE COLOMBES (FR)
(74) Mandataire: Berthier, Karine
(86) Numéro de dépôt international: PCT/FR2005/050306
(87) Numéro de publication internationale: WO 2005/119967

(56) Documents cités:
- WO-A1-02/37880
- WO-A1-03/019876
- WO-A2-01/47182
- US-A- 6 094 678

## Description

L'invention concerne le domaine des réseaux de communication radio comportant une installation de transmission de données, et plus particulièrement la transmission de trafics d'informations de gestion au sein de tels réseaux. Le document WO 02/37880 A1 divulgue un dispositif de contrôle à distance: un message est transmis sur l'état d'un équipement et en retour une commande est appliqué par un opérateur. On entend ici par « réseau de communication radio comportant une installation de transmission de données » un réseau de communication radio satellitaire ou terrestre, tel qu'un réseau GSM/GPRS ou UMTS, utilisant au moins une installation de transmission de données sur une partie de ses liaisons.

Par ailleurs, on entend par « installation de transmission de données », une installation comportant des première et seconde stations de transmission pouvant se transmettre des données, généralement sous une forme compressée, par l'intermédiaire d'une liaison particulière terrestre (filaire ou radio) ou satellitaire. Les première et seconde stations de transmission peuvent être installées soit au niveau de l'interface dite « A-bis » du réseau, c'est-à-dire entre certaines de ses stations de base et son contrôleur de stations de base associé, soit sur l'interface dite « A-ter », c'est-à-dire entre son contrôleur de stations de base et un transcodeur couplé à un commutateur d'appels associé (ou MSC pour « Mobile-services Switching Centre ») et chargé de convertir la voix compressée en paroles numérisées à 64 kbps (kilo bits par seconde), soit encore sur l'interface dite « A », c'est-à-dire entre ledit transcodeur et le commutateur d'appels.

Comme le sait l'homme de l'art, l'utilisation d'une installation de transmission peut constituer une solution particulièrement attractive pour les opérateurs de réseaux de communication radio lorsqu'ils souhaitent déployer rapidement leurs réseaux. C'est notamment le cas, lorsque l'installation de transmission est une installation de déport satellitaire, puisqu'elle permet un déploiement sur des sites très étalés sur le plan géographique et/ou dispersés sur de grands territoires, sans nécessiter une infrastructure terrestre lourde et onéreuse.

Grâce à de tels déports satellitaires, la signalisation et le trafic peuvent en effet être transmis d'une partie du réseau dite distante, raccordée à une première station satellitaire, vers une autre partie du réseau dite centrale, raccordée à une seconde station satellitaire couplée à la première via un satellite de communications, elle-même couplée au coeur du réseau. Cela permet, par exemple, de transmettre à un module de gestion de stations satellitaires, éventuellement couplé au coeur du réseau, des informations de gestion relatives à des équipements gérés constituant une première station satellitaire.

A cet effet, on peut par exemple utiliser, au niveau de la liaison satellite, un canal de service dédié, de capacité fixe, pour transmettre les flux de gestion. Mais, cette solution présente au moins deux inconvénients. Un premier inconvénient résulte du fait qu'en l'absence de flux de gestion à transmettre, la capacité demeure réservée au canal de service dédié, ce qui est particulièrement ennuyeux compte tenu du coût extrêmement élevé de la location de capacités satellitaires. Un deuxième inconvénient résulte du fait qu'en raison du coût précité on cherche généralement à limiter au minimum la capacité allouée au canal de service dédié, et que par conséquent le débit des flux de gestion est lent, ce qui entraîne une mise à jour des indicateurs de gestion et une prise en compte des commandes assez lentes.

Pour tenter de remédier à ces inconvénients, il a été proposé de multiplexer les flux de gestion avec le trafic dit « utile ». Mais, cela nécessite la mise en place d'un équipement de multiplexage à chaque extrémité de la liaison satellite, dont le coût est relativement important.

Il a également été proposé de multiplexer et de compresser les flux de gestion. Mais cela nécessite un équipement de multiplexage et un équipement de compression/décompression à chaque extrémité de la liaison satellite, ce qui augmente sensiblement le coût du déport par satellite.

Aucune solution connue n'étant entièrement satisfaisante, l'invention a donc pour but d'améliorer la situation dans les réseaux radio satellitaires ou terrestres comportant au moins une installation de transmission, par exemple de type satellitaire.

Elle propose à cet effet une station de transmission distante, pour une installation de transmission d'un réseau de communication radio comprenant un équipement de gestion de stations de transmission à protocole d'administration choisi.

Cette station de transmission distante se caractérise par le fait qu'elle comprend, d'une part, des moyens de gestion chargés d'obtenir des états d'informations de gestion, relatives à ses équipements gérés, et d'autre part, des moyens de traitement chargés i) de stocker l'ensemble des états précédemment obtenus par les moyens de gestion, ii) de comparer les états nouvellement obtenus aux états précédents stockés, de manière à déterminer chaque variation d'état, et iii) de générer des messages comportant chaque variation d'état déterminée afin qu'ils puissent être transmis à l'équipement de gestion de stations de transmission du réseau, via la liaison de transmission de l'installation.

On entend ici par « état » notamment l'état d'un paramètre d'une MIB d'équipement géré, ou l'état d'un ensemble de paramètres tels que ceux contenus dans des mémoires d'équipements gérés.

La station de transmission distante selon l'invention peut comporter d'autres caractéristiques qui pourront être prises séparément ou en combinaison, et notamment :
- ses moyens de traitement peuvent être chargés d'associer à chaque variation d'état, un identifiant représentant l'information de gestion et l'équipement géré correspondants, et d'intégrer dans les messages chaque variation d'état et l'identifiant associé,
- lorsque l'un au moins de ses équipements gérés, dit « premier équipement », comprend un agent protocolaire local couplé à une base d'informations de gestion primaire dans laquelle sont stockés les états en cours de ses informations de gestion, ses moyens de gestion comprennent un agent protocolaire principal chargé de dialoguer avec l'agent protocolaire local afin d'obtenir tous les états stockés dans la base d'informations de gestion associée,
- lorsque l'un au moins de ses équipements gérés, dit « second équipement », comprend une mémoire, dans laquelle sont stockés les états en cours de ses informations de gestion, et des moyens de contrôle couplés à cette mémoire et interrogeables au moyen d'un protocole de gestion spécifique, ses moyens de gestion comprennent des moyens de médiation chargés de dialoguer avec les moyens de contrôle selon le protocole associé afin d'obtenir tous les états stockés dans la mémoire à laquelle ils sont couplés,
- ses moyens de médiation peuvent définir des agents protocolaires locaux associés chacun à l'un des seconds équipements et chargés d'alimenter l'agent protocolaire principal en états provenant des seconds équipements,
- ses moyens de traitement peuvent être chargés d'associer un niveau de priorité choisi à chaque variation d'état déterminée, en fonction d'une table de contrôle, afin que la variation d'état présentant le niveau de priorité le plus élevé soit transmise prioritairement. Lorsque cette table de contrôle définit en outre un rythme de transmission de variations d'état, ses moyens de traitement sont préférentiellement agencés de manière à générer les messages en fonction du rythme,
- un équipement géré définissant un compresseur/décompresseur de données chargé de compresser des données selon un procédé choisi, y compris celles contenues dans les messages, à transmettre via la liaison de transmission, et de décompresser des données compressées selon le procédé choisi et reçues via la liaison de transmission. On peut également prévoir un autre équipement géré définissant un autre compresseur/décompresseur de données, sensiblement identique au premier, l'un fonctionnant pendant que l'autre est en position de veille, et chaque compresseur/décompresseur de données comprenant en outre des moyens d'observation chargés d'observer le fonctionnement de l'autre compresseur/décompresseur afin de forcer son propre compresseur/ décompresseur à fonctionner à la place de l'autre en cas de détection d'un problème de fonctionnement au niveau de ce dernier,
- le protocole d'administration peut être par exemple le protocole SNMP (pour « Simple Network Management Protocol »), chaque agent local étant alors un agent SNMP et l'agent protocolaire principal étant un gestionnaire SNMP (ou « SNMP manager »).

L'invention propose également une station de transmission centrale pour une installation de transmission d'un réseau de communication radio comprenant un équipement de gestion de stations de transmission à protocole d'administration choisi.

Cette station de transmission centrale se caractérise par le fait qu'elle comprend, d'une part, des mémoires associées chacune à l'un des équipements gérés d'une station de transmission distante du type de celle présentée ci-avant, et dans lesquelles sont stockés les derniers états connus des informations de gestion relatives à chacun des équipements gérés, et d'autre part, des moyens de traitement chargés d'analyser les messages, reçus de la station de transmission distante via la liaison de transmission de l'installation, afin d'extraire les variations d'états qu'ils comportent puis de les confronter aux états correspondants stockés dans les mémoires pour déterminer les nouveaux états correspondants et mettre à jour les mémoires avec ces nouveaux états déterminés.

La station de transmission centrale selon l'invention peut comporter d'autres caractéristiques qui pourront être prises séparément ou en combinaison, et notamment :
- chacune de ses mémoires peut constituer une base d'informations de gestion secondaire,
- des agents protocolaires en nombre égal au nombre d'équipements gérés de la station de transmission distante, couplés chacun aux moyens de traitement et à l'une des mémoires, et capables chacun d'interroger la mémoire associée sur requête de l'équipement de gestion, en vue de lui transmettre des états en cours d'informations de gestion,
- ses moyens de traitement peuvent être chargés de générer des messages de commande et/ou des messages de configuration à destination de la station de transmission distante, en vue d'obtenir des variations d'état relatives à l'un au moins de ses équipements gérés et/ou de configurer ses équipements gérés,
- un équipement géré définissant un compresseur/décompresseur de données chargé de décompresser des données selon un procédé choisi, y compris celles contenues dans les messages reçus via la liaison de transmission, et de compresser des données selon le procédé choisi en vue de leur transmission à la station de transmission distante, via la liaison de transmission,
- le protocole d'administration peut être par exemple le protocole SNMP.

L'invention propose également une installation de transmission, pour un réseau de communication radio comprenant un équipement de gestion de stations de transmission, et comportant au moins une station de transmission distante et au moins une station de transmission centrale du type de celles présentées ci-avant.

Cette installation de transmission est par exemple une installation de déport satellitaire dans laquelle la liaison de transmission est assurée par un satellite de communications et les stations de transmission distante et centrale sont des stations satellitaires.

L'invention est particulièrement bien adaptée, bien que de façon non exclusive, aux réseaux de communication mobiles, comme par exemple les réseaux cellulaires de type TDMA ou CDMA, et en particulier les réseaux GSM, GPRS, EDGE et UMTS. Mais, l'invention est également adaptée aux réseaux de communication par satellite, exploitant des satellites de type GEO, MEO ou LEO. L'invention est en outre adaptée aux réseaux de communication terrestres, exploitant par exemple des liaisons câblées, à fibres optiques, ou par voie hertzienne.

L'invention est particulièrement bien adaptée, bien que de façon non exclusive, aux réseaux utilisant un ou plusieurs déports par satellite sur une partie de leurs liaisons.

Par ailleurs, l'invention s'applique à tout type de flux de gestion, qu'il soit transmis de manière brute ou compressée.

D'autres caractéristiques et avantages de l'invention apparaîtront à l'examen de la description détaillée ci-après, et des dessins annexés, sur lesquels :
- la figure 1 illustre de façon schématique un exemple de réseau de communication radio comprenant une installation de déport satellitaire selon l'invention, et
- la figure 2 illustre de façon schématique et fonctionnelle un exemple d'installation de déport satellitaire selon l'invention.

Les dessins annexés pourront non seulement servir à compléter l'invention, mais aussi contribuer à sa définition, le cas échéant.

L'invention a pour objet de permettre la limitation de la capacité de transmission de données sur une liaison de transmission spécifique au sein d'un réseau de communication radio.

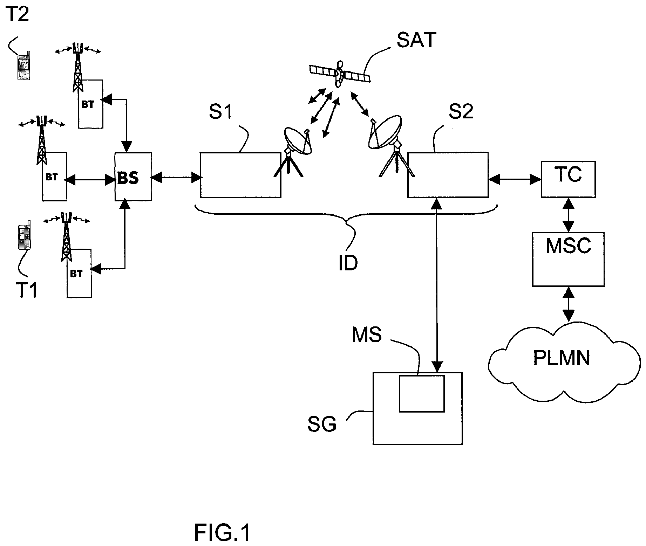

On se réfère tout d'abord à la figure 1 pour décrire un réseau de communication radio comportant une installation de transmission ID selon l'invention.

Dans ce qui suit, on considère que le réseau radio est de type GSM/GPRS. Mais, l'invention n'est pas limitée à ce type de réseau. Elle concerne tous les réseaux radio terrestres, et notamment ceux de type EDGE ou UMTS, et d'une manière générale les réseaux de communication radio terrestres tels que ceux de type TDMA ou CDMA. Elle concerne également les réseaux de communication par satellite.

Par ailleurs, dans ce qui suit on entend par « installation de transmission » une installation de déport par satellite comportant une station satellitaire dite distante S1, au moins une station satellitaire dite centrale S2, et une liaison satellite assurée par un satellite de communications SAT. Mais, l'invention n'est pas limitée à ce type d'installation de transmission. Elle concerne en effet tout type d'installation de transmission comportant au moins une station de transmission distante, au moins une station de transmission centrale et un réseau de transmission filaire ou non pour coupler les différentes stations.

Comme cela illustré sur la figure 1, un réseau GSM/GPRS à déport satellitaire comprend schématiquement, mais de façon suffisante à la compréhension de l'invention :
- des stations de base BTS (pour « Base Transceiver Station ») comportant des équipements radio réalisant la liaison avec des terminaux de communication mobiles,
- un ou plusieurs contrôleurs de stations de base BSC (pour « Base Station Controller ») auxquels sont raccordés une ou plusieurs stations de base BTS et chargés d'assurer la gestion des ressources radio,
- au moins un lien satellite comportant un satellite de communications SAT, et des première S1 et seconde G2 stations de communications satellitaires, se présentant généralement sous la forme d'une passerelle (ou « gateway ») et chargées de transmettre du trafic et de la signalisation via le satellite SAT,
- au moins un commutateur d'appels central MSC (pour « Mobile-services Switching Centre ») chargé de gérer les communications établies dans le secteur géographique couvert par les stations de base BTS couplées au(x) contrôleurs de stations de base BSC au(x)quel(s) il est couplé, via le satellite SAT, et raccordé au coeur du réseau (ici de type PLMN, pour « Public Land Mobile Network ») ainsi que de préférence (et comme illustré) à un transcodeur TC chargé de convertir la voix compressée en paroles numérisées à 64 kbps (kilo bits par seconde) et réciproquement.

Dans l'exemple illustré, le lien satellite est implanté au niveau de l'interface A-ter du réseau, c'est-à-dire entre le contrôleur de stations de base BSC et le transcodeur TC. Par conséquent, la première station satellitaire S1 (également appelée station distante) est raccordée au contrôleur de stations de base BSC, tandis que la seconde station satellitaire S2 (également appelée station centrale) est raccordée au transcodeur TC. Mais, le lien satellite peut être implanté au niveau de l'interface A-bis du réseau, c'est-à-dire entre les stations de base BTS et le contrôleur de stations de base BSC associé, ou bien sur l'interface A, c'est-à-dire entre le transcodeur TC et le commutateur d'appels central MSC. Ces interfaces sont définies par les normes G.703 pour ce qui concerne la couche physique et G.704 pour ce qui concerne le tramage (généralement à 2048 kbps).

Dans un tel réseau, les flux de gestion propres au réseau de communication radio sont échangés sur l'interface A-bis au moyen de canaux de signalisation multiples (au moins un canal par station de base BTS), occupant chacun soit un octet (dans le cas de canaux à 64 kbps), soit deux bits par trame (dans le cas de canaux à 16 kbps).

Les flux de trafic propres au réseau de communication radio sont échangés sur l'interface A-bis au moyen de canaux TCH (pour « Traffic Channels »). Chaque canal TCH occupe alors soit deux bits par trame (dans le cas d'un canal de type « Full Rate » (ou FR) à 16 kbps), soit un bit (dans le cas d'un canal de type « Half Rate » (ou HR) à 8 kbps). Dans le cas d'une communication vocale on utilise un canal TCH dans chaque sens, de taille et de position identiques au sein de chaque trame dite E1 entrante ou sortante sur un port physique donné.

Dans un réseau à déport satellitaire, la station distante S1 comprend généralement plusieurs équipements de transmission gérés, commandés et configurés par des messages de commande et des messages de configuration fournis par un module de gestion de stations MS au moyen d'un protocole d'administration choisi. Ce module de gestion de stations MS est par exemple implanté dans un serveur de gestion SG couplé à la station de transmission centrale S2.

Il est rappelé que la gestion des moyens de transmission est généralement dissociée de la gestion du réseau de communication radio (protocoles différents et finalités différentes).

Parmi les équipements gérés, on peut notamment citer l'amplificateur de puissance radio-fréquences (RF), l'équipement de changement de fréquence, le modem, le compresseur/décompresseur, les commutateurs de redondance, et les servitudes, comme par exemple les dispositifs d'alarme et de surveillance (inondation, incendie, intrusion, et analogues), le climatiseur, et les équipements d'alimentation électrique (batterie couplée à des panneaux solaires et/ou groupe électrogène).

Lorsque le protocole d'administration choisi est le protocole SNMP (pour « Simple Network Management Protocol »), le module de gestion de stations MS est appelé gestionnaire SNMP (ou « SNMP manager »). On considère dans ce qui suit, à titre d'exemple illustratif, que le protocole d'administration choisi est le protocole SNMP.

Certains messages de commande, générés par le gestionnaire SNMP MS, requièrent des stations distante S1 et centrale S2 qu'elles transmettent les états d'informations de gestion de leurs équipements gérés, afin que l'opérateur puisse connaître leur état de fonctionnement et prendre des décisions rapides en cas de problème. L'invention intervient principalement dans le mécanisme de remontée des états des informations de gestion des équipements gérés de la station distante S1, séparée du gestionnaire SNMP MS par le lien satellite SAT (notamment).

Plus précisément, l'invention a pour but de permettre la réduction de la capacité réservée à la transmission des états d'informations de gestion des équipements gérés de la station distante S1, ainsi qu'à la transmission des messages de commande et/ou de configuration à ladite station distante S1, au niveau du lien de transmission (ici satellite), établi entre les stations distante S1 et centrale S2.

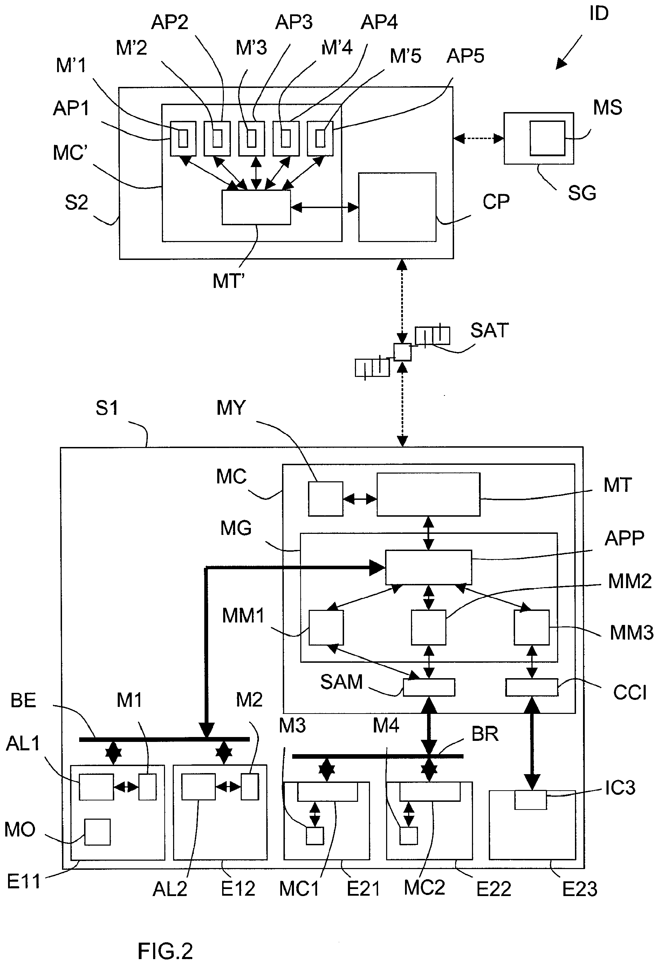

L'invention propose à cet effet que la station distante S1 comprenne (comme illustré sur la figure 2), ou soit couplée à, un module de contrôle MC comportant notamment un module de gestion MG couplé à un module de traitement MT.

Le module de gestion MG est chargé d'obtenir des états d'informations de gestion, relatives aux équipements gérés E1 i (ici i = 1 et 2) et E2j (ici j = 1 à 3) de la station distante.

On entend ici par « état », l'état d'un paramètre d'une MIB d'équipement géré, ou l'état d'un ensemble de paramètres tels que ceux contenus dans des mémoires (M3-M4) d'équipements gérés. Le mot état concerne donc ici, notamment, des données présentant un nombre restreint de valeurs possibles (comme par exemple des indicateurs binaires), et des valeurs de paramètres, par exemple de type compteur.

Le module de traitement MT est chargé, d'une première part, de stocker dans une mémoire MY, dédiée à cet effet, l'ensemble des états qui ont été précédemment obtenus par le module de gestion MG, d'une deuxième part, de comparer les états nouvellement obtenus aux états qu'il a précédemment stockés de manière à déterminer chaque variation d'état survenue depuis la dernière obtention, et d'une troisième part, de générer des messages comportant chaque variation d'état déterminée afin qu'ils puissent être transmis au gestionnaire SNMP MS, via le satellite SAT (notamment).

Préférentiellement, lorsque le module de traitement MT génère un message comportant des données définissant au moins une variation d'état, il associe à cette variation d'état un identifiant qui représente l'information de gestion correspondante et l'équipement géré correspondant. Un tel identifiant peut être par exemple de type OID (« Object IDentifier »).

Le module de gestion MG peut être agencé de différentes manières selon le(s) type(s) d'équipements gérés de la station distante S1 dans laquelle il est implanté (ou à laquelle il est couplé). Trois cas peuvent en effet être envisagés.

Un premier cas concerne une situation dans laquelle tous les équipements gérés comportent un agent protocolaire local AL (ici de type « agent SNMP »), chargé notamment de répondre aux requêtes qu'il reçoit selon le protocole d'administration (ici SNMP) et de déterminer au sein d'une base d'informations de gestion (ou MIB pour « Management Information Base ») l'état de chaque information de gestion désignée dans la requête afin de le communiquer à l'élément de réseau qui a généré la requête.

Un deuxième cas concerne une situation dans laquelle aucun équipement géré ne comporte d'agent protocolaire local AL.

Un troisième cas concerne une situation dans laquelle certains équipements gérés comportent un agent protocolaire local AL et d'autres non. Cette situation est illustrée sur la figure 2. Plus précisément, dans l'exemple illustré la station distante S1 comporte, d'une part, deux équipements gérés E11 et E12 munis chacun d'un agent SNMP local AL1, AL2 et d'une MIB M1, M2, et d'autre part, trois équipements gérés E21, E22 et E23 dépourvus d'agent SNMP.

Les deux équipements gérés E11 et E12, et donc leurs deux agents SNMP locaux AL1 et AL2, sont raccordés au module de gestion MG par l'intermédiaire d'un réseau local BE, par exemple de type Ethernet. L'équipement géré E11 est par exemple un compresseur/décompresseur de données, tandis que l'équipement géré E12 est par exemple un modem.

Les deux équipements gérés E21 et E22 comprennent chacun un module de contrôle MC1, MC2, couplé à une mémoire M3, M4 dans laquelle sont stockés les états des informations de gestion accessibles, et chargé de répondre aux requêtes qu'il reçoit selon un protocole de gestion choisi et de déterminer au sein de la mémoire M3, M4 l'état de chaque information de gestion désignée dans la requête afin de le communiquer à l'élément de réseau qui a généré cette requête. Ils sont raccordés au module de gestion MG par l'intermédiaire d'un bus BR, par exemple de type RS-485, lui-même raccordé à un module de gestion d'accès série SAM (« Serial Access Manager»). L'équipement géré E21 est par exemple un amplificateur de puissance radio-fréquences (RF), tandis que l'équipement géré E22 est par exemple un équipement de changement de fréquence.

Enfin, l'équipement géré E23 ne comporte aucun module de contrôle capable d'échanger des messages. Un tel équipement présente généralement des entrées / sorties simples, de type relais et contacts de relais, permettant de recevoir des commandes d'activation basiques et de fournir des indications binaires sur l'état des organes surveillés. Un tel équipement est raccordé via son dispositif IC3 (Interface Câblé) au module de gestion MG par l'intermédiaire d'une liaison filaire, elle-même raccordée à une interface de servitude CCI (« Contact Closure Interface ») côté module de gestion MG. L'équipement géré E23 est par exemple un équipement de servitude comme par exemple des détecteurs d'intrusion ou un climatiseur.

Dans cet exemple, le module de gestion MG comporte tout d'abord un agent protocolaire principal APP, de type gestionnaire SNMP (ou « SNMP manager » en anglais), chargé de dialoguer, via le bus Ethernet BE, avec les agents SNMP locaux des équipements gérés E11 et E12 afin d'obtenir tous les états qui sont stockés dans les MIBs M1 et M2 associées.

Les autres équipements gérés E2j ne comportant pas d'agent SNMP local, le module de gestion MG comporte également des modules de médiation MMj, en nombre égal au nombre d'équipements gérés dépourvus d'agent SNMP local. Chaque module de médiation MMj est en effet adapté de manière à dialoguer avec un module de contrôle MCj, via le module de gestion d'accès série SAM, en utilisant son protocole de gestion, ou à contrôler via l'interface de servitude CCI les équipements présentant un interface câblé tels que IC3. Chaque module de médiation MMj peut ainsi obtenir de l'équipement géré E2j, auquel il est associé, tous les états qui sont stockés dans sa mémoire M3, ou M4, ou connaître l'état des organes contrôlés via l'interface câblé IC3.

Par ailleurs, chaque module de médiation MMj est chargé de convertir au format du protocole SNMP les messages et informations qui proviennent de l'équipement géré E2j auquel il est associé et selon son format de protocole. Ainsi, chaque module de médiation MMj peut transmettre au gestionnaire SNMP APP des messages au format du protocole d'administration (SNMP) qu'il utilise et qu'il peut donc lire directement.

En outre, chaque module de médiation MMj est chargé de convertir les requêtes et commandes provenant du gestionnaire SNMP APP selon le format SNMP en requêtes et commandes au format du protocole de gestion de l'équipement géré E2j auquel il est associé.

Le gestionnaire SNMP APP peut ainsi obtenir tous les états en cours des informations de gestion, accessibles auprès de chaque équipement géré E1i, E2j, selon un même format, et peut de ce fait les communiquer au module de traitement MT afin qu'il puisse les comparer aux états précédents stockés dans la mémoire dédiée MY en vue de la détermination de variations d'état. Le gestionnaire SNMP APP joue ainsi, en quelque sorte, le rôle d'un gestionnaire de type « proxy » vis à vis des équipements gérés localement et des équipements de gestion situés en amont, qui vont exploiter les informations remontées par le module de traitement MT (il a donc un rôle de relais d'informations).

Il est important de noter qu'en présence d'équipements gérés disposant tous d'un agent protocolaire local AL, le module de gestion MG n'est constitué que d'un agent protocolaire principal (ou gestionnaire SNMP) APP.

Le module de traitement MT peut être par ailleurs chargé d'établir des priorités de transmission entre les variations d'état qu'il a déterminées. Il dispose alors d'une table de contrôle d'actualisation dont les informations de priorité lui permettent d'associer un niveau de priorité choisi à chaque variation d'état déterminée. Par exemple, les données de type statistique, qui représentent généralement un volume important d'informations, peuvent se voir attribuer un niveau de priorité inférieur, tandis que les informations d'alarme peuvent être transmises avec le niveau de priorité le plus élevé.

La table de contrôle d'actualisation peut également comporter des informations définissant le rythme selon lequel les variations d'état des différentes informations de gestion doivent être transmises au gestionnaire SNMP MS du réseau via le satellite SAT. Les messages, générés par le module de traitement MT et comportant les variations d'état, peuvent ainsi être multiplexés, conformément au rythme prévu, par le compresseur/ décompresseur de la station distante, et en fonction de la capacité de transmission non utilisée par les flux de trafic, en vue d'être communiqués via le satellite SAT à la station centrale S2.

Lorsque le volume de trafic tend à saturer la capacité de transmission disponible, le module de traitement MT réduit le rythme d'actualisation des données non critiques, telles que précisément les données statistiques, tout en continuant à prioriser les informations critiques telles que l'apparition de telle ou telle information d'alarme. Ce processus de régulation de flux est géré par l'organe de compression/décompression associé, qui fournit au module de traitement MT un indicateur représentatif d'un état de saturation momentané de la capacité de transmission, ou un indicateur représentatif du pourcentage d'occupation de la capacité de transmission, ou la valeur effective de capacité disponible à chaque instant pour la transmission des flux de gestion.

Par ailleurs, afin d'éviter tout disfonctionnement du module de contrôle MC si le compresseur/décompresseur de la station distante S1 est défaillant ou s'il perd sa liaison avec la station centrale S2, on peut équiper la station distante S1 d'un second compresseur/décompresseur. Les deux compresseurs/ décompresseurs sont alors installés en parallèle, mais seul l'un fonctionne (maître) pendant que l'autre est placé dans un état de veille (esclave). Chaque compresseur/décompresseur dispose alors préférentiellement d'un module d'observation MO chargé de surveiller en permanence les échanges établis par son homologue. Si une incohérence répétitive est détectée en sortie d'un compresseur/décompresseur par le module d'observation MO de l'autre compresseur/décompresseur, ou en cas d'absence de messages en sortie du compresseur/décompresseur, le module d'observation MO ayant effectué la détection de problème transmet une commande à destination du compresseur/décompresseur défaillant, destinée à l'invalider, et ordonne à son propre compresseur/décompresseur de se substituer à celui qui est défaillant.

Le module de contrôle MC, et notamment son module de traitement MT et son module de gestion MG, peuvent être réalisés sous la forme de circuits électroniques, de modules logiciels (ou informatiques), ou d'une combinaison de circuits et de logiciels.

Il est important de noter que le module de contrôle MC peut faire partie de l'un des équipements gérés de la station distante S1, et en particulier de son compresseur/décompresseur.

La station centrale S2 reçoit les messages compressés en provenance de la station distante S1, via, ici, le satellite SAT. Ces messages ne comportant que des variations d'état afin de réduire au minimum le nombre de données de gestion à transmettre et donc la capacité du lien de transmission (ici le satellite SAT), il est avantageux qu'elle soit chargée de transformer ces variations d'état en état en cours, afin de pouvoir les mettre à la disposition du gestionnaire SNMP MS du réseau.

Pour ce faire, la station centrale S2 comprend, en complément de ses équipements gérés habituels, un module de contrôle MC', couplé à son compresseur/décompresseur CP, et comportant des mémoires M'k et un module de traitement MT'.

Chaque mémoire M'k (ici k = 1 à 5) est associée à l'un des équipements gérés de la station distante S1. Elle constitue en quelque sorte la réplique de la MIB (M1, M2) des équipements E11 et E22 intégrant un agent SNMP, ou de la MIB gérée par les agents de médiation MM1 à MM3 pour les équipements non compatibles du protocole SNMP (E21 à E23). Par conséquent, chaque mémoire M'k stocke les derniers états connus des informations de gestion qui sont relatives à l'équipement géré E1i ou E2j auquel elle est associée.

Chaque mémoire M'k est préférentiellement implantée dans (ou couplée à) un agent protocolaire APk de type agent SNMP (dans l'exemple décrit). Par conséquent, chaque mémoire M'k se présente préférentiellement sous la forme d'une MIB. Ainsi, lorsque le gestionnaire SNMP a besoin de connaître les états d'une ou plusieurs informations de gestion relatives à un ou plusieurs équipements gérés de la station distante S1, il n'a plus qu'à adresser une ou plusieurs requêtes en ce sens à destination du module de contrôle MC', de sorte que chacun de ses agents protocolaires APk traite la requête qui le concerne en interrogeant la MIB M'k à laquelle il est couplé. Il n'est donc plus nécessaire de transmettre jusqu'au niveau de la station distante S1 les requêtes du gestionnaire SNMP MS ayant pour but de lui fournir des états en cours d'informations de gestion. Cela permet de réduire encore la quantité de données devant transiter par le lien satellite SAT et donc la capacité dédiée à cet effet. En outre cela permet de fournir plus rapidement, et éventuellement plus souvent, au gestionnaire SNMP MS, les états en cours des informations de gestion.

Chaque agent protocolaire APk peut éventuellement servir d'intermédiaire au module de traitement MT' pour accéder aux derniers états connus, stockés dans la mémoire M'k à laquelle il est couplé, et pour la mise à jour des états de cette mémoire M'k.

Le module de traitement MT' de la station centrale S2 est chargé de mettre à jour les MIB M'k, à partir des variations d'état contenues dans les messages reçus du satellite SAT. Pour ce faire il extrait de chaque message reçu chaque variation d'état qu'il contient, puis il la confronte à l'état correspondant stocké dans la MIB M'k de l'équipement géré correspondant. Il utilise pour ce faire l'identifiant (OID), ou une version condensée de cet identifiant, qui est associé dans le message à la variation d'état, lequel désigne l'information et l'équipement géré correspondants. Cette confrontation lui permet de déduire le nouvel état de l'information de gestion concernée, qu'il substitue alors à l'état précédent stocké dans la MIB Mk', de manière à la mettre à jour. Ce processus d'actualisation peut être également opéré par le module de traitement MT' sans effectuer de confrontation avec l'état antérieur de l'information concernée, notamment dans le cadre d'indicateurs binaires.

Le module de traitement MT' de la station centrale S2 est par ailleurs préférentiellement agencé de manière à générer des messages de commande et/ou des messages de configuration à destination de la station distante S1, à partir des commandes de même type provenant du gestionnaire SNMP. Ces commandes sont ensuite transmises au compresseur/décompresseur CP afin d'être compressées, multiplexées avec le trafic utile, avant d'être transmises au modem puis à l'équipement radio (RF) et enfin au satellite SAT.

Le module de contrôle MC', et notamment son module de traitement MT' et ses agents protocolaires APk, peuvent être réalisés sous la forme de circuits électroniques, de modules logiciels (ou informatiques), ou d'une combinaison de circuits et de logiciels.

Il est important de noter que le module de contrôle MC' peut faire partie de l'un des équipements gérés de la station centrale S2, et en particulier de son compresseur/décompresseur.

Grâce à l'invention, le gestionnaire SNMP MS et les équipements gérés de la station distante S1 n'ont pas besoin d'être modifiés. Leurs modes de couplage demeurent inchangés par rapport aux solutions classiques, alors que la capacité du lien de transmission (par exemple un satellite) requise pour ces couplages est très inférieure à celle requise par une solution classique.

L'invention ne se limite pas aux modes de réalisation de station de transmission distante, de station de transmission centrale et d'installation de transmission décrits ci-avant, seulement à titre d'exemple, mais elle englobe toutes les variantes que pourra envisager l'homme de l'art dans le cadre des revendications ci-après.

Ainsi, dans ce qui précède on a décrit une application de l'invention à une installation de déport satellitaire. Mais, l'invention s'applique à toute installation de transmission comprenant au moins une station de transmission distante et au moins une station de transmission centrale pouvant se transmettre des données par l'intermédiaire d'une liaison de transmission particulière terrestre (filaire ou radio) ou satellitaire.

Cette invention est particulièrement avantageuse dans le cadre de réseaux de transmission par satellite opérant en mode DAMA (« Demand Assignment Multiple Access ») ou BOD (« Bandwidth On Demand »), pour lesquels le dispositif selon l'invention bénéficie en permanence des reliquats de bande passante non utilisés par le trafic utile pour acheminer dans les meilleurs délais les informations de gestion critique, et actualiser selon un rythme élevé les informations non critiques à chaque fois que la somme des trafics acheminés est suffisamment réduite pour octroyer une capacité de transmission significative pour les flux non prioritaires, tout ceci sans avoir à fixer de manière permanente et arbitraire une capacité dédiée pour chaque lien de gestion.

## Revendications

1. Station de transmission distante (S1) pour une installation de transmission (ID) d'un réseau de communication radio comprenant au moins un équipement (MS) de gestion de stations de transmission à protocole d'administration choisi, ladite station (S1) comprenant des équipements gérés (E) et étant située dans une partie du réseau séparée dudit équipement de gestion (MS) par une liaison de transmission (SAT) de ladite installation (ID), **caractérisée en ce qu'**elle comprend des moyens de gestion (MG) propres à obtenir des états d'informations de gestion relatives auxdits équipements gérés (E), et des moyens de traitement (MT1) agencés i) pour stocker l'ensemble des états précédemment obtenus par lesdits moyens de gestion (MG), ii) pour comparer lesdits états nouvellement obtenus auxdits états précédents stockés, de manière à déterminer chaque variation d'état, et iii) pour générer des messages comportant chaque variation d'état déterminée, la station de transmission distante (S1) comprenant en outre un équipement géré définissant un compresseur de données (E11) agencé pour compresser selon un procédé choisi les données contenues dans lesdits messages, afin que lesdits messages soient transmis audit équipement de gestion (MS) via ladite liaison (SAT).

2. Station selon la revendication 1, **caractérisée en ce que** lesdits moyens de traitement (MT) sont agencés pour associer à chaque variation d'état, un identifiant représentatif de l'information de gestion et de l'équipement géré correspondants, et pour intégrer dans lesdits messages chaque variation d'état et l'identifiant associé.

3. Station selon l'une des revendications 1 et 2, **caractérisée en ce que** certains au moins desdits équipements gérés (E1i), dits « premiers équipements », comprennent un agent protocolaire local (ALi) couplé à une base d'informations de gestion primaire (M1,M2) dans laquelle sont stockés les états en cours de ses informations de gestion, et **en ce que** lesdits moyens de gestion (MG) comprennent un agent protocolaire principal (APP) agencé pour dialoguer avec chaque agent protocolaire local (ALi) afin d'obtenir tous les états stockés dans la base d'informations de gestion associée (M1, M2).

4. Station selon l'une des revendications 1 à 3, **caractérisée en ce que** certains au moins desdits équipements gérés (E2j), dits « seconds équipements », comprennent une mémoire (M3-M4), dans laquelle sont stockés les états en cours de leurs informations de gestion, et des moyens de contrôle (MCj) couplés à ladite mémoire et interrogeables au moyen d'un protocole de gestion spécifique, et **en ce que** lesdits moyens de gestion (MG) comprennent des moyens de médiation (MMj) agencés pour dialoguer avec chacun desdits moyens de contrôle (MCj) selon le protocole associé afin d'obtenir tous les états stockés dans les mémoires auxquelles ils sont couplés.

5. Station selon la combinaison des revendications 3 et 4, **caractérisée en ce que** lesdits moyens de médiation (MMj) définissent des agents protocolaires locaux associés chacun à l'un desdits seconds équipements et agencés pour alimenter ledit agent protocolaire principal (APP) en états provenant desdits seconds équipements (E2j).

6. Station selon l'une des revendications 1 à 5, **caractérisée en ce que** lesdits moyens de traitement (MT) sont agencés pour associer un niveau de priorité choisi à chaque variation d'état déterminée en fonction d'une table de contrôle, de sorte que soit transmis prioritairement la variation d'état présentant le niveau de priorité le plus élevé.

7. Station selon la revendication 6, **caractérisée en ce que** ladite table de contrôle définissant en outre un rythme de transmission de variations d'état, lesdits moyens de traitement (MT) sont agencés pour générer lesdits messages en fonction dudit rythme.

8. Station selon l'une des revendications 1 à 7, **caractérisée en ce que** l'équipement géré définissant un compresseur de données (E11) est également agencé pour compresser selon le procédé choisi des données à transmettre via ladite liaison (SAT), et que ledit équipement géré définissant un compresseur définit également un décompresseur pour décompresser des données compressées selon ledit procédé choisi et reçues via ladite liaison (SAT).

9. Station selon la revendication 8, **caractérisée en ce qu'**elle comprend un autre équipement géré définissant un autre compresseur/décompresseur de données, sensiblement identique au premier (E11), l'un fonctionnant pendant que l'autre est en position de veille, et chaque compresseur/décompresseur de données comprenant en outre des moyens d'observation propres à observer le fonctionnement de l'autre compresseur/décompresseur de manière à forcer son propre compresseur/décompresseur à fonctionner à la place de l'autre en cas de détection de problème de fonctionnement au niveau de ce dernier.

10. Station selon l'une des revendications précédentes, **caractérisée en ce que** ledit protocole d'administration est le protocole SNMP, chaque agent local (ALi) étant alors un agent SNMP et l'agent protocolaire principal (APP) étant alors un gestionnaire SNMP.

11. Station de transmission centrale (S2) pour une installation de transmission (ID) d'un réseau de communication radio comprenant un équipement (MS) de gestion de stations de transmission à protocole d'administration choisi, ladite station (S2) étant située dans une partie du réseau comprenant ledit équipement de gestion (MS), **caractérisée en ce qu'**elle comprend des mémoires (M'k) associées chacune à l'un des équipements gérés (E) d'une station de transmission distante (S1 selon l'une des revendications 1 à 10, et dans lesquelles sont stockés les derniers états connus des informations de gestion relatives à chacun desdits équipements gérés (E), ladite station de transmission centrale comprenant en outre un équipement géré définissant un décompresseur de données (CP) agencé pour décompresser selon un procédé choisi des données contenues dans lesdits messages reçus de ladite station de transmission distante (S1) via ladite liaison de transmission (SAT) de l'installation (ID), et ladite station de transmission centrale comprenant également des moyens de traitement (MT') agencés pour analyser lesdits messages, reçus de ladite station de transmission distante (S1) via ladite liaison de transmission (SAT) de l'installation (ID) et décompressés par l'équipement définissant un décompresseur de données (CP), de manière à extraire les variations d'états qu'ils comportent puis à les confronter aux états correspondants stockés dans lesdites mémoires (M'k) de manière à déterminer les nouveaux états correspondants, et pour mettre à jour lesdites mémoires (M'k) avec lesdits nouveaux états déterminés.

12. Station selon la revendication 11, **caractérisée en ce que** chaque mémoire (M'k) constitue une base d'informations de gestion secondaire.

13. Station selon l'une des revendications 11 et 12, **caractérisée en ce qu'**elle comprend des agents protocolaires (APk) en nombre égal au nombre d'équipements gérés de ladite station de transmission distante (S1), couplés chacun auxdits moyens de traitement (MT) et à l'une desdites mémoires (M'k), et propres chacun à interroger la mémoire (M'k) associée sur requête dudit équipement de gestion (MS), en vue de lui transmettre des états en cours d'informations de gestion.

14. Station selon l'une des revendications 11 à 13, **caractérisée en ce que** lesdits moyens de traitement (MT') sont agencés pour générer des messages de commande et/ou des messages de configuration à destination de ladite station de transmission distante (S1), en vue d'obtenir des variations d'état relatives à l'un au moins de ses équipements gérés (E) et/ou de configurer lesdits équipements gérés (E).

15. Station selon l'une des revendications 11 à 14, **caractérisée en ce que** l'équipement géré définissant un décompresseur de données (CP) est également agencé pour décompresser selon le procédé choisi des données reçues via ladite liaison, et **en ce que** l'équipement géré définissant un décompresseur de données définit également un compresseur pour compresser des données selon ledit procédé choisi en vue de leur transmission à ladite station de transmission distante (S1), via ladite liaison (SAT).

16. Station selon l'une des revendications 11 à 15, **caractérisée en ce que** ledit protocole d'administration est le protocole SNMP.

17. Installation de transmission (ID) pour un réseau de communication radio comprenant un équipement (MS) de gestion de stations de transmission, **caractérisée en ce qu'**elle comprend au moins une station de transmission distante (S1) et au moins une station de transmission centrale (S2) selon l'une des revendications précédentes.

18. Installation selon la revendication 17, **caractérisée en ce qu'**elle constitue une installation de déport satellitaire dans laquelle ladite liaison de transmission est assurée par un satellite de communications (SAT) et lesdites stations de transmission distante (S1) et centrale (S2) sont des stations satellitaires.

## Patentansprüche

1. Entfernte Sendestation (S1) für eine Sendeinstallation (ID) eines Funkkommunikationsnetzes, mindestens eine Vorrichtung (MS) zur Verwaltung von Stationen zur Übermittlungen per ausgewähltem Verwaltungsprotokoll umfassend, wobei besagte Station (S1) verwaltete Geräte (E) umfasst und in einem Bereich des Netzes gelegen und von besagter Verwaltungsvorrichtung (MS) durch eine Übermittlungsverbindung (SAT) besagter Installation (ID) getrennt ist, **dadurch gekennzeichnet, dass** die Station Verwaltungsmittel (MG), die ausgelegt sind für das Erlangen von Verwaltungsinformationszuständen zu besagten verwalteten Geräten (E), und Verarbeitungsmittel (MT1) umfasst, die ausgelegt sind i) für das Speichern der zuvor von besagten Verwaltungsmitteln (MG) erlangten Zustände, ii) für das Vergleichen der besagten, neuerlich erlangten Zustände mit den besagten, zuvor gespeicherten Zuständen, dergestalt, dass jegliche Zustandsveränderung bestimmt wird, und iii) für das Generieren von Nachrichten, die jede bestimmte Zustandsveränderung enthalten, wobei die entfernte Sendestation (S1) weiterhin ein verwaltetes Gerät umfasst, welches einen Datenkomprimierer (E11) definiert, der dafür ausgelegt ist, um nach einem ausgewählten Verfahren die Daten zu komprimieren, die in besagten Nachrichten enthalten sind, damit besagte Nachrichten über die besagte Verbindung (SAT) an die besagten Verwaltungsgeräte (MS) übermittelt werden.

2. Station nach Anspruch 1, **dadurch gekennzeichnet, dass** die besagten Verarbeitungsmittel (MT) ausgelegt sind für das Assoziieren einer jeden Zustandsänderung mit einer Kennung, welche die entsprechende Verwaltungsinformation und das entsprechende verwaltete Gerät repräsentiert, sowie weiterhin dafür ausgelegt, um in besagte Nachrichten jede Zustandsänderung und die assoziierte Kennung zu integrieren.

3. Station nach einem der Ansprüche 1 und 2, **dadurch gekennzeichnet, dass** mindestens einige der besagten verwalteten Geräte (E1i), "erste Geräte" genannt, einen lokalen Protokollagenten (ALi) umfassen, der gekoppelt ist an eine primäre Verwaltungsinformationsbasis (M1, M2), in welcher die aktuellen Zustände seiner Verwaltungsinformationen gespeichert sind, sowie **dadurch gekennzeichnet, dass** besagte Verwaltungsmittel (MG) einen Hauptprotokollagenten (Agent Protocolaire Principal, APP) umfassen, der ausgelegt ist für das Dialogieren mit jedem lokalen Protokollagenten (ALi), um alle in der assoziierten Verwaltungsinformationsbasis (M1, M2) gespeicherten Zustände zu erlangen.

4. Station nach einem der Ansprüche 1 bis 3, **dadurch gekennzeichnet, dass** mindestens einige der besagten verwalteten Geräte (E2j), "zweite Geräte" genannt, einen Speicher (M3-M4) umfassen, in welchem die aktuellen Zustände ihrer Verwaltungsinformationen gespeichert sind, und weiterhin Steuermittel (Moyens de Contrôle, MCj), die an besagten Speicher gekoppelt und anhand eines spezifischen Verwaltungsprotokolls abfragbar sind, sowie **dadurch gekennzeichnet, dass** besagte Verwaltungsmittel (MG) Messmittel (MMj) umfassen, die dafür ausgelegt sind, um gemäß dem assoziierten Protokoll mit jedem der besagten Steuermitteln (MCj) zu dialogieren, um alle Zustände zu erlangen, die in den Speichern gespeichert sind, an die sie gekoppelt sind.

5. Station nach der Kombination der Ansprüche 3 und 4, **dadurch gekennzeichnet, dass** die besagten Messmittel (MMj) lokale Protokollagenten definieren, von denen jeder mit einem der besagten zweiten Geräte assoziiert und dafür ausgelegt ist, besagten Hauptprotokollagenten (APP) mit Zuständen zu versorgen, die von besagten zweiten Geräten (E2j) stammen.

6. Station nach einem der Ansprüche 1 bis 5, **dadurch gekennzeichnet, dass** die besagten Verarbeitungsmittel (MT) dafür ausgelegt sind, um jeder bestimmten Zustandsänderung in Funktion einer Steuertabelle eine ausgewählte Prioritätsstufe zuzuweisen, dergestalt, dass prioritär die Zustandsänderung übermittelt wird, welche die höchste Prioritätsstufe aufweist.

7. Station nach Anspruch 6, **dadurch gekennzeichnet, dass** besagte Steuertabelle weiterhin einen Rhythmus zur Übermittlung von Zustandsänderungen festlegt, wobei besagte Verarbeitungsmittel (MT) ausgelegt sind für das Generieren besagter Nachrichten in Funktion des besagten Rhythmus.

8. Station nach einem der Ansprüche 1 bis 7, **dadurch gekennzeichnet, dass** das einen Datenkomprimierer (E11) definierende, verwaltete Gerät weiterhin dafür ausgelegt ist um gemäß dem ausgewählten Verfahren Daten zu komprimieren, die über besagte Verbindung (SATy zu übermitteln sind, sowie **dadurch gekennzeichnet, dass** besagtes verwaltetes Gerät, welches einen Komprimierer definiert, weiterhin einen Dekomprimierer zum Dekomprimieren von Daten definiert, die gemäß besagtem ausgewähltem Verfahren komprimiert und über die besagte Verbindung (SAT) empfangen wurden.

9. Station nach Anspruch 8, **dadurch gekennzeichnet, dass** sie ein weiteres verwaltetes Gerät umfasst, welches einen weiteren, dem ersten (E11) weitgehend identischen Datenkomprimierer/-dekomprimieter definiert, wobei einer funktioniert, während der andere im Standby-Zustand ist, und wobei jeder Datenkomprimierer/- dekomprimierer weiterhin eigene Beobachtungsmittel zur Beobachtung des anderen Komprimierers/Dekomprimierers umfasst, dergestalt, dass der eigene Komprimierer/Dekomprimierer dann zum Funktionieren anstelle des anderen veranlasst wird, wenn auf der Ebene des Letzteren eine Funktionsstörung festgestellt wird.

10. Station nach einem der vorgenannten Ansprüche, **dadurch gekennzeichnet, dass** besagtes Verwaltungsprotokoll das SNMP-Protokoll ist, wobei jeder lokale Agent (ALi) dann ein SNMP-Agent und der Hauptprotokollagent (APP) dann eine SNMP-Verwaltungsvorrichtung ist.

11. Zentrale Sendestation (S2) für eine Sendeinstallation (ID) eines Funkkommunikationsnetzes, eine Vorrichtung (MS) zur Verwaltung von Sendestationen nach einem ausgewählten Verwaltungsprotokoll umfassend, wobei besagte Station (S2) in einem Bereich des Netzes gelegen ist, der besagte Verwaltungsvorrichtung (MS) umfasst, **dadurch gekennzeichnet, dass** sie Speicher (M'k) umfasst, die jeweils mit einem der verwalteten Geräte (E) einer entfernten Sendestation (S1) nach einem der Ansprüche 1 bis 10 assoziiert sind und in denen die aktuellsten bekannten Zustände der Verwaltungsinformationen zu einem jeden der besagten, verwalteten Geräte (E) gespeichert sind, wobei besagte zentrale Sendestation weiterhin ein verwaltetes Gerät umfasst, welches einen Datendekomprimierer (CP) umfasst, der dafür ausgelegt ist, um nach einem ausgewählten Verfahren Daten zu dekomprimieren, die in den besagten, von der besagten, entfernten Sendestation (S1) über die besagte Übermittlungsverbindung (SAT) der Installation (ID) erhaltenen Nachrichten enthalten sind, und wobei die besagte zentrale Sendestation weiterhin Verarbeitungsmittel (MT') umfasst, die ausgelegt sind für das Analysieren der besagten Nachrichten, die von der besagten, entfernten Sendestation (S1) über besagte Übermittlungsverbindung (SAT) der Installation (ID) empfangen werden und von dem Gerät dekomprimiert werden, welches einen Datendekomprimierer (CP) definiert, dergestalt, dass in ihnen enthaltene Zustandsänderungen extrahiert werden, um diese mit den entsprechenden Zuständen zu vergleichen, die in besagten Speichern (M'k) gespeichert sind, um so die neuen entsprechenden Zustände zu bestimmen und um die besagten Speicher (M'k) mit den besagten, neu bestimmten Zuständen zu aktualisieren.

12. Station nach Anspruch 11, **dadurch gekennzeichnet, dass** jeder Speicher (M'k) eine sekundäre Verwaltungsinformationsbasis bildet.

13. Station nach einem der Ansprüche 11 und 12, **dadurch gekennzeichnet, dass** sie Protokollagenten (APk) in gleicher Anzahl wie die Anzahl der von besagter entfernter Sendestation (S1) verwalteten Geräte umfasst, jeder von ihnen gekoppelt an die besagten Verarbeitungsmittel (MT) und an einen der besagten Speicher (M'k), und jeder von ihnen dafür ausgelegt, um auf Anfrage besagter Verwaltungsvorrichtung (MS) hin bei der assoziierten Datenbank (M'k) zu dem Zweck anzufragen, um ihr die aktuellen Zustände der Verwaltungsinformationen zu übermitteln.

14. Station nach einem der Ansprüche 11 bis 13, **dadurch gekennzeichnet, dass** die besagten Verarbeitungsmittel (MT') ausgelegt sind für das Generieren von Befehlsnachrichten und/oder Konfigurationsnachrichten an die Adresse der besagten, entfernten Sendestation (S1), um die Zustandsänderungen bezüglich des mindestens einen seiner verwalteten Geräte (E) zu erhalten und/oder die besagten verwalteten Geräte (E) zu konfigurieren.

15. Station nach einem der Ansprüche 11 bis 14, **dadurch gekennzeichnet, dass** das einen Datendekomprimierer (CP) definierende, verwaltete Gerät weiterhin dafür ausgelegt ist um gemäß dem ausgewählten Verfahren Daten zu dekomprimieren, die über besagte Verbindung empfangen werden, sowie **dadurch gekennzeichnet, dass** besagtes verwaltetes Gerät, welches einen Datendekomprimierer definiert, weiterhin einen Komprimierer zum Komprimieren von Daten gemäß besagtem ausgewähltem Verfahren definiert, um sie über die besagte Verbindung (SAT) an besagte entfernte Sendestation (S1)zu übermitteln.

16. Station nach einem der Ansprüche 11 bis 15, **dadurch gekennzeichnet, dass** das besagte Verwaitungsprotokofl SNMP ist.

17. Sendeinstallation (ID) für ein Funkkommunikationsnetz, eine Vorrichtung (MS) zur Verwaltung von Sendestationen umfassend, **dadurch gekennzeichnet, dass** die Installation mindestens eine entfernte Sendestation (S1) und mindestens eine zentrale Sendestation (S2) nach einem der vorgenannten Ansprüche umfasst:

18. Installation nach Anspruch 17, **dadurch gekennzeichnet, dass** sie eine Satellitenfernmeldeinstallation ist, wobei besagte Übermittlungsverbindung von einem Kommunikationssatelliten (SAT) gewährleisten wird und wobei besagte entfernte Sendestation (S1) und zentrale Sendestation (S2) Satellitenstationen sind.

## Claims

1. A remote transmission station (S1) for a transmission facility (ID) of a radio communication network comprising at least one piece of equipment (MS) for managing transmission stations with a chosen administration protocol, said station (S1) comprising managed equipment (E) and being located in a part of the network separated from said management equipment (MS) by a transmission link (SAT) of said facility (ID), **characterized in that** it comprises management means (MG) able to obtain management information statuses related to said managed equipment (E), and processing means (MT) arranged i) to store all of the statuses obtained earlier by said management means (MG), ii) to compare said newly obtained statuses to said previously stored statuses, so as to determine each change in status, and iii) to generate messages comprising each determined change in status, said remote transmission station (S1) further comprising a managed equipment defining a data compressor (E11) arranged to compress using a chosen method the data contained in said messages, so that said messages may be transmitted to said management device (MS) via said link (SAT).

2. A station according to claim 1, **characterized in that** said processing means (MT) are arranged to associate each change in status with an identifier representative of the management information and the corresponding managed equipment, and to integrate into said messages each change in status and the corresponding identifier.

3. A station according to one of the claims 1 and 2, **characterized in that** at least some of said managed equipment (E1i), called "first equipment," comprise a local protocol agent (ALi) coupled to a primary management information base (M1,M2) which stores the current statuses of its management information, and **in that** said management means (MG) comprise a main protocole agent (APP) arranged to dialog with each local protocol agent (ALi) in order to obtain all of the statuses stored in the corresponding management information base (M1, M2).

4. A station according to any one of the claims 1 to 3, **characterized in that** at least some of said management equipment (E2j), called "second equipment", comprise a memory (M3-M4), which stores the current statuses of their management information, and control means (MCj) coupled to said memory and queryable by means of a specific management protocol, and **in that** said management means (MG) comprise mediation means (MMj) arranged to dialog with each of said control means (MCj) under the corresponding protocol in order to obtain the statuses stored in the memories to which they are coupled.

5. A station according to the combination of claims 3 and 4, **characterized in that** said mediation means (MMj) define local protocol agents each associated with one of said second equipment and arranged to supply said main protocol agent (APP) with statuses drawn from said second equipment (E2j).

6. A station according to one of the claims 1 to 5, **characterized in that** said processing means (MT) are arranged to assign a chosen priority level to each change in status determined based on a control table, so that changes in status with the highest level of priority are treated as a priority during transmission.

7. A station according to claims 6, **characterized in that** said control table further defining a pace of transmitting changes in status, said processing means (MT) are arranged to generate said messages at said pace.

8. A station according to one of the claims 1 to 7, **characterized in that** the managed equipment defining a data compressor (E11) is also arranged to compress data to be transmitted via said link (SAT) based on the chosen method, and that said managed equipment defining a compressor also defines a decompressor for decompressing compressed data using said chosen method and received via said link (SAT).

9. A station according to claim 8, **characterized in that** it comprises another piece of managed equipment defining another data compressor/decompressor, substantial identical to the first (E11), with one operating while the other is in the standby position, and each data compressor/decompressor further comprising observation means able to observe the operation of the other compressor/decompressor in such a way as to force its own compressor/decompressor to operate in place of the other one if an operational problem is detected in the other one.

10. A station according to one of the preceding claims, **characterized in that** said administration protocol is the SNMP protocol, each local agent (ALi) being in such case an SNMP agent and the main protocol agent (APP) being in such case an SNMP manager.

11. A central transmission station (S2) for a transmission facility (ID) of a radio communication network comprising a piece of equipment (MS) for managing transmission stations with a chosen administration protocol, said station (S1) being located in a part of the network comprising said management equipment (MS), **characterized in that** it comprises memories (M'k) each associated with one of the managed equipment (E) of a remote transmission station (S1) according to one of the claims 1 to 10 and which stores the most recent known statuses of management information related to each of said managed equipment (E), said central transmission station further comprising a piece of managed equipment defining a data decompressor (CP) arranged to decompress based on a chosen protocol data contained in said messages received from said remote transmission station (S1) via said transmission link (SAT) of the facility (ID), and said central transmission station further comprising processing means (MT arranged to analyze said messages, received from said remote transmission station (sol) via said transmission link (SAT) of the facility (ID) and decompressed by the equipment defining a data decompressor (CP), so as to extract the changes in status that they comprise, then to reconcile them with the corresponding statuses stored in said memories (M'k) so as to determine the new corresponding statuses, and to update said memories (M'k) with said determined statuses.

12. A station according to claim 11, **characterized in that** each memory (M'k) constitutes a secondary management information base.

13. A station according to one of the claims 11 and 12, **characterized in that** it comprises protocol agents (APk) whose number is equal to the number of pieces of managed equipment of said remote transmission station (S1), each one coupled to said processing means (MT) and to one of said memories (M'k), and each capable of querying the corresponding memory (M'k) upon request of said management equipment (MS), in order to transmit current management information statuses to it.

14. A station according to one of the claims 11 to 13, **characterized in that** said processing means (MT') are arranged to generate command messages and/or configuration messages intended for said remote transmission station (S1), in order to obtain changes in status related to at least one of its managed equipment (E) and/or to configure said managed equipment (E).

15. A station according to one of the claims 11 to 14, **characterized in that** the managed equipment defining a data decompressor (CP) is also arranged to decompress, according to the chosen method, data received via said link, and **in that** the managed equipment defining a data decompressor also defines a compressor for compressing data according to said chosen method in order to transmit them to said remote transmission station (S1), via said link (SAT).

16. A station according to one of the claims 11 to 15, **characterized in that** said administration protocol is the SNMP protocol.

17. A transmission facility (ID) for a radio communication network comprising equipment (MS) for managing transmission stations, **characterized in that** it comprises at least one remote transmission station (S1) and at least one central transmission station (S2) according to one of the preceding claims.

18. A facility according to claim 17, **characterized in that** it constitutes a satellite uplink facility in which said transmission link is provided by a communications satellite (SAT) and said remote (S1) and central (S2) transmission stations are satellite stations.
